# EUROPEAN PATENT APPLICATION

(11) **EP 2 816 847 A1**
(43) Date of publication of application: **24.12.2014**
(21) Application number: 13305828.9
(22) Date of filing: 20.06.2013
(51) Int. Cl.: H04W 48/18, H04W 48/14, H04W 48/20, H04W 88/06

(54) **A method for selecting a wireless access network, among several access networks**

(71) Applicant: ALCATEL LUCENT, 92100 Boulogne-Billancourt (FR)
(72) Inventor: El Mghazli, Yacine, 91620 Nozay (FR); Orlandi, Barbara, 91620 Nozay (FR)
(74) Representative: Sciaux, Edmond

(57) **Abstract**

A method for selecting a wireless access network, among several access networks (AN A, AN B, AN C) in order to accelerate content delivery for at least one application (A1, A2) running on a terminal (T1; T2), each access network comprising at least one delivery appliance (DA1, DA2, ...) belonging to a content delivery network (CDN X, CDN Y, ...) and containing a local copy (S1', S2', ...) of content that the terminal may retrieve for said application; comprises the steps of:
- sending a query message (QM1a, ...; QM2A, ...) from a terminal (T1; T2) to an access point (HSA1, ...; HSA2, ...), this query message requesting data about at least one content delivery network (CDN X, CDN Y, ...) for which the access network to which the interrogated access point is linked comprises a delivery appliance (DA1, DA2, ...);
- then sending a response message (RP1 a, ...; RP2a, ...) from the access point (HSA1, ...; HSA2, ...) to the terminal (T1; T2), this response message comprising first data about at least one content delivery network (CDN X, CDN Y, ...) for which the access network to which the interrogated access point is linked comprises a delivery appliance (DA1, DA2, ...);
- collecting, in the terminal, second data about at least one application (A1, A2) running in the terminal;
- and then selecting an access point as a function of these first and second data.

## Description

### BACKGROUND OF THE INVENTION

### Field of the invention

The present invention generally relates to content delivery networks also called content distribution network (CDN). A content delivery network is a system of caches containing copies of content, placed at various points in a network so as to maximize bandwidth for access to the content from clients throughout the network. A client accesses a copy of the content in a cache near to this client, as opposed to all clients accessing a same central server. This method avoids bottlenecks near a central server and reduces traffic on the backhaul network. Content types include: web objects, downloadable objects (media files, software and documents), applications and real time media streams.

A CDN is made up of:
- an origin server, by which a content is "injected" into the CDN;
- delivery appliances (whether permanent or not) geographically distributed on Internet "edges", comprising caches in which the content is replicated;
- a semantic routing mechanism ("name-based routing") that allows a user request for a piece of content to be served by the "closest" delivery appliance, in the semantic sense.

A delivery appliance is a key CDN component whose primary purpose is delivery of content to consumers. Each cache of a delivery appliance runs one or more delivery applications. The delivery appliances are deployed as close to the edge of the Internet as possible, i. e. in the access networks.

CDN are very important today because it is the main factor responsible for the quality of experience of the user. If a user doesn't have a local copy of the content, which he/she is retrieving from the Internet, it is highly probable that this user notices it immediately because the content transmission speed is noticeably slower.

On the other hand, mobile users have a wide range of wireless access network options to connect their wireless devices (A WiFi access point at home, a cellular network or WiFi hotspots outdoor). When a mobile user needs to receive content from a given CDN, the problem for this mobile user is to discover and choose the best wireless access network for its usage, i. e. where a delivery appliance, containing a local copy of the content that the user wants to retrieve from the given CDN, is present.

This choice is often driven by administrative reasons (e.g. a higher priority is given to the hotspots belonging to the mobile network operator, or to the home WiFi access point). But the choice can also take into account quality of service parameters (e.g. the current load of a given access point). However there is no existing solution to take into account the presence (or the absence) of a delivery appliance containing a local copy of the content that the user wants to retrieve (or is currently retrieving) from a given CDN, when a mobile terminal is discovering and selecting an access network.

### Description of the prior art

The Application-Layer Traffic Optimization (ALTO) service provides network information (e.g., basic network location structure and preferences of network paths) with the goal of modifying network resource consumption patterns while maintaining or improving application performance. The basic information of ALTO is based on abstract maps of a network. These maps provide a simplified view, yet enough information about a network for applications to effectively utilize them. Additional services are built on top of the maps.

The ALTO service could perhaps be used to include, in its costs, a criterion that relates to the presence, in a given wireless access network, of a delivery appliance, containing a local copy of the content that the user wants to retrieve from a given CDN. But this implies an end-to-end architecture where the ALTO server would have to know all CDN and Wi-Fi network providers relationships.

The standard IEEE802.11 describes the Access Network Query Protocol (ANQP), which is a query and response protocol used by a mobile device to discover a range of information, including the hotspot operator's domain name, roaming partners accessible via the hotspot, Internet Protocol address type availability (IPv4, IPv6), and other metadata useful in a mobile device's network selection process.

In addition the Wi-Fi Alliance has created a new standardization activity called Hotspot 2.0. Among the agreed requirements, Hotspot 2.0 will improve the ability of Wi-Fi devices to discover and securely connect to public Wi-Fi hotspots and thereby enable easier roaming between public Wi-Fi networks. Hotspot 2.0 work builds on the IEEE 802.11u specification, which provides query mechanisms to enable devices to discover information about the roaming partners available and hence the type of credentials which may be used with the access point.

IEEE 802.11u-2011 is an amendment to the IEEE 802.11-2007 standard, to add features that improve interworking with external networks. This amendment provides for the discovery of suitable networks (pre-association) through the advertisement of access network type (private network, free public network, for-fee public network, roaming consortium, and venue information).

Access Network Discovery and Selection Function (ANDSF) is an entity within an evolved packet core of the system architecture evolution for the 3rd Generation Partnership Project (3GPP) compliant mobile networks. The purpose of the ANDSF is to assist user equipment to discover non-3GPP access networks - such as Wi-Fi or WIMAX - that can be used for data communications, in addition to 3GPP access networks and to provide the user equipment with rules policing the connection to these networks.

An ANDSF access network can provide the following information to user equipment, based on operator configuration:
- Inter-system mobility policy (ISMP): Network selection rules for a user equipment with no more than one active access network connection (e.g. LTE or Wi-Fi)
- Inter-system routing policy (ISRP): Network selection rules for a user equipment with potentially more than one active access network connection (e.g., both LTE and Wi-Fi). Such user equipment may employ Internet Protocol Flow Mobility (IFOM), Multiple-access Packet Data Network connectivity (MAPCON) or non-seamless Wi-Fi offload according to operator policy and user preferences.
- Discovery information: A list of networks that may be available in the vicinity of the user equipment and information assisting the user equipment to expedite the connection to these networks.

Unfortunately, in ANDSF nothing is specified regarding the advertisement of a delivery appliance containing a local copy of the content that the user wants to retrieve (or is currently retrieving) from a given CDN.

Thus, there is a need to provide a technical solution for this problem.

This can be solved by applying the method according to the invention.

### SUMMARY OF THE INVENTION

A method for selecting a wireless access network, among several access networks in order to accelerate content delivery for at least one application running on a terminal each access network comprising at least one delivery appliance belonging to a content delivery network and containing a local copy of content that the terminal may retrieve for said application, is **characterized in that** it comprises the steps of:
- sending a query message from a terminal to an access point, this query message requesting data about at least one content delivery network for which the access network to which the interrogated access point is linked comprises a delivery appliance;
- then sending a response message from the access point to the terminal, this response message comprising first data about at least one content delivery network for which the access network to which the interrogated access point is linked comprises a delivery appliance;
- collecting, in the terminal, second data about at least one application running in the terminal;
- and then selecting an access point as a function of these first and second data.

The first and the second data enable the terminal to determine whether the access network, to which the interrogated access point is linked, comprises a delivery appliance that contains a local copy of content that the terminal may retrieve for the application(s) running on this terminal.

By comparing the second data and the first data the terminal can select an access point that satisfies, as far as possible, the needs of the application(s) as concerns accelerated content downloading.

According to a first embodiment of the method according to the present invention, said first data comprise at least one content delivery network identifier.

According to a second embodiment of the method according to the present invention, said first data comprise at least one application identifier.

Another object of the invention is an access point and a terminal for implementing this method.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1 shows a block diagram representing three exemplary CDN that can be accessed via three access networks.
- Figure 2 shows a block diagram that illustrates a first embodiment of the method according to the invention.

- Figure 3 shows a block diagram that illustrates a second embodiment of the method according to the invention.
- Figure 4 shows a block diagram of an embodiment of the access point according to the invention.
- Figure 5 shows a block diagram of an embodiment of the terminal according to the invention.

### DETAILED DESCRIPTION OF THE PREFERRED EMBODIMENTS

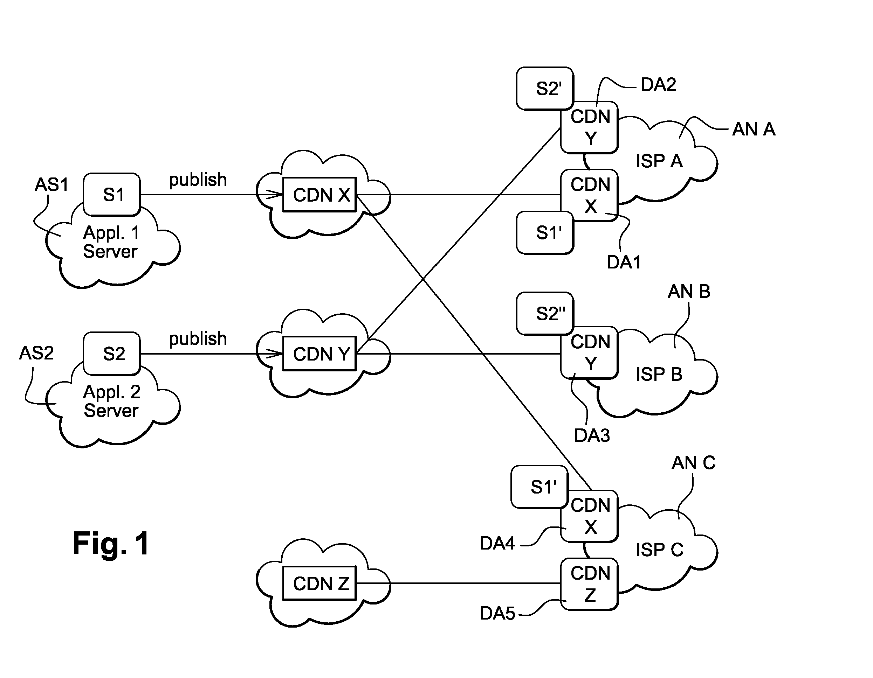

**Figure 1** shows a block diagram representing three exemplary content delivery networks CDN X, CDN Y, CDN Z, that can be accessed via three access networks AN A, AN B, AN C belonging to Internet service providers ISP A, ISP B, ISP C.

An origin server AS1 runs an application Appl. 1, by which content S1 is replicated into a content delivery network CDN X.

An origin server AS2 runs an application Appl. 2, by which content S2 is replicated into a content delivery network CDN Y.

Other origin servers (not represented on the figure) run other applications by which other content can be replicated into a content delivery network CDN Z.

The access network AN A of the internet service provider ISP A comprises:
- A delivery appliance DA1 containing a local copy S1' of the content S1 that can be retrieved from the content delivery network CDN X.
- A delivery appliance DA2 containing a local copy S2' of the content S2 that can be retrieved from the content delivery network CDN Y.

The access network AN B of the internet service provider ISP B comprises a delivery appliance DA3 containing another local copy S2" of the content S2 that can be retrieved from the content delivery network CDN Y.

The access network AN C of the internet service provider ISP C comprises:
- A delivery appliance DA4 containing a local copy S1" of the content S1 that can be retrieved from the content delivery network CDN X.
- A delivery appliance DA5 that, at this time, does not store any copy of S1 or S2 because neither the application Appl.1 nor the application Appl. 2 delegated to CDN-Z the role of replicating their content in the delivery appliances of CDN Z.

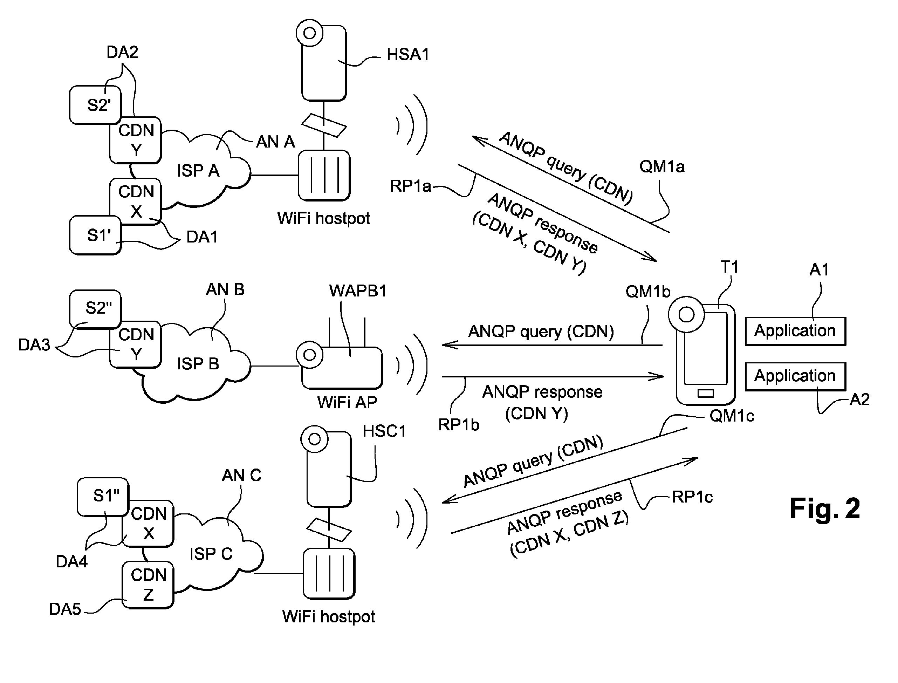

**Figure 2** shows a block diagram that illustrates a first embodiment of the method according to the invention, in the exemplary networks represented on Figure 1. The access network AN A comprises a Wi-Fi hotspot HSA1 implementing the first embodiment of the method according to the invention. The access network AN B comprises a Wi-Fi access point WAPB1 implementing the first embodiment of the method according to the invention. The access network AN C comprises a Wi-Fi hotspot HSC1 implementing the first embodiment of the method according to the invention.

A wireless terminal T1 is within the coverage of the Wi-Fi hotspot HSA1, the Wi-Fi access point WAPB1, and the Wi-Fi hotspot HSC1. It implements the first embodiment of the method according to the invention for choosing the best access point among them. It needs to retrieve content from the content delivery networks CDN X for running application A1; and to retrieves content from the content delivery networks CDN Y for running application A2.

According to the first embodiment of the method according to the invention, an access point (a private access point or a hotspot) of a given access network advertizes the identifier of each CDN for which a delivery appliance is present in this access network; and the terminals know the application-CDN relationship. For instance, the terminal T1 knows that the content needed for the application A1 can be retrieved via the content delivery network CDN X; and that the content needed for the application A2 can be retrieved via the content delivery network CDN Y. Any application software installed on the terminal T1 comprises information about a CDN where content can be retrieved for this application.

In this first embodiment, a new element is added to the known access network query protocol ANQP. This element provides, to a terminal, the identifier of each CDN for which a delivery appliance is present in an access network, when an access point of this access network is queried by a terminal. The terminal can then determine, among the applications that are running on it, which application(s) can benefit from an accelerated access thanks to an agreement with a CDN provider.

For instance, there could be an identifier for Akamaï, another for Velocix, another for Google, etc.

According to the standard 801.11 the format of an ANQP message is a 2-octet Information Identifier field (Info ID), a 2-octet length field, and a variable-length element-specific information field. Existing ANQP elements are described in table 8-184 from the standard IEEE 802.11-2011. The Wi-Fi Alliance has standardized, in Hotspot 2.0 specification, some additional ANQP elements (using the vendor specific Info Identification field and a subtype value for each new element (See section 4 of the Hotspot 2.0 specification).

For example on Figure 2, the terminal T1 sends ANQP query messages QM1a, QM1b, QM1c restively to the Wi-Fi hotspot HSA1, the Wi-Fi access point WAPB1, and the Wi-Fi hotspot HSC1. Each of these ANQP query message comprises a CDN identifier request, in order to receive the CDN identifier of each CDN for which there is at least one delivery appliance in the access network to which the interrogated access point is linked.

The Wi-Fi hotspot HSA1 sends an ANQP response message RP1a to the terminal T1, this message comprising the CDN identifiers CDN X and CDN Y of each CDN for which there is at least one delivery appliance, respectively DA1 and DA2, in the access network AN A to which the interrogated Wi-Fi hotspot HSA1 is linked.

The Wi-Fi access point WAPB1 sends an ANQP response message RP1b to the terminal T1, this message comprising the CDN identifier CDN Y of the unique CDN for which there is at least one delivery appliance in the access network AN B to which the interrogated Wi-Fi access point WAPB1 is linked.

The Wi-Fi hotspot HSC1 sends an ANQP response message RP1c to the terminal T1, this message comprising the CDN identifiers CDN X and CDN Z of each CDN for which there is at least one delivery appliance, respectively DA4 and DA5, in the access network AN C to which the interrogated Wi-Fi hotspot HSC1 is linked.

In the terminal T1, a software module called connection manager is in charge of selecting an access point among the available access points. It receives the response messages RP1a, RP1b, RP1c. On the other hand, this software module knows that the application A1 may retrieve content S1 that is replicated in delivery appliances of content delivery network CDN X, and that the application A2 may retrieve content S2 that is replicated in the delivery appliances of content delivery network CDN Y. It selects one access point among the Wi-Fi hotspot HSA1, the Wi-Fi access point WAPB1, and the Wi-Fi hotspot HSC1, so that the applications A1 and A2 are satisfied. In this example, it selects the Wi-Fi hotspot HSA1. This latter can provide an accelerated delivery of the content S1 and S2 thanks to the local copies S1' and S2' stored in the delivery appliances DA1 and DA2 present in the access network AN A.

For instance, the application provider Dailymotion has an agreement with the CDN Akamaï. So the Dailymotion application running on the terminal knows that the access points that respond with the CDN identifier Akamaï should be preferred. This application supplies this preference information to the software module in charge of selecting an access point, in the terminal.

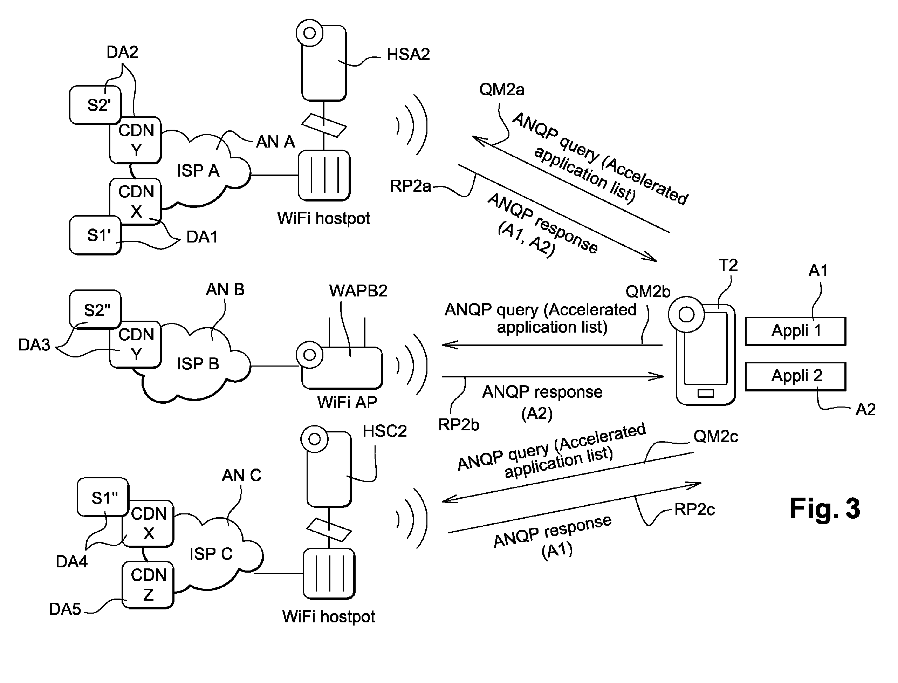

**Figure 3** shows a block diagram that illustrates a second embodiment of the method according to the invention, in the exemplary networks represented on Figure 1.

The access network AN A comprises a Wi-Fi hotspot HSA2 implementing the second embodiment of the method according to the invention. The access network AN B comprises a Wi-Fi access point WAPB2 implementing the second embodiment of the method according to the invention. The access network AN C comprises a Wi-Fi hotspot HSC2 implementing the second embodiment of the method according to the invention.

A wireless terminal T2 is within the coverage of the Wi-Fi hotspot HSA2, the Wi-Fi access point WAPB2, and the Wi-Fi hotspot HSC2. It implements the second embodiment of the method according to the invention for choosing the best access point among them. It may retrieve content from the content delivery networks CDN X for running application A1; and to retrieves content from the content delivery networks CDN Y for running application A2.

According to the second embodiment of the method according to the invention, an access point (a private access point or a hotspot) of a given access network advertizes the identifier of each application whose content is replicated on the delivery appliance present in this access network. In this second embodiment, the terminal doesn't need to know the application-CDN relationship as in the first embodiment.

A new element is defined in the ANQP protocol to provide, per device Operating System, an application identifier for each application for which a delivery appliance is present in this access network. This application identifier is based on two sub-fields:
- a first sub-field for the device Operating System identifier (OSId) for instance a Universally Unique Identifier (UUID) as specified in IETF RFC 4122;
- and a second sub-field for the actual operating system specific application identifier.

For example on Figure 3, the terminal T2 sends ANQP query messages QM2a, QM2b, QM2C respectively to the Wi-Fi hotspot HSA2, the Wi-Fi access point WAPB2, and the Wi-Fi hotspot HSC2. Each of these query ANQP messages comprises an accelerated application list request, in order to receive the identifiers of all the applications for which there is at least one delivery appliance present in the access network to which the interrogated access point is linked.

The Wi-Fi hotspot HSA2 sends an ANQP response message RP2a to the terminal T2, this message comprising the identifiers A1 and A2 of the applications for which there is at least one operational delivery appliance, respectively DA1 and DA2, present in the access network AN A to which the interrogated Wi-Fi hotspot HSA2 is linked.

The Wi-Fi access point WAPB2 sends an ANQP response message RP2b to the terminal T2, this message comprising the identifier A2 of the unique application for which there is at least one operational delivery appliance present in the access network AN B to which the interrogated Wi-Fi access point WAPB2 is linked.

The Wi-Fi hotspot HSC2 sends an ANQP response message RP1c to the terminal T1, this message comprising the identifier A1 of the application for which there is at least one operational delivery appliance, DA4, present in the access network AN C to which the interrogated Wi-Fi hotspot HSC2 is linked (The delivery appliance DA5 is not operational because it does not contain any content that can be used for accelerating an application, at this time).

In the terminal T2, a software module called connection manager is in charge of selecting an access point. It receives the response messages RP2a, RP2b, RP2c. On the other hand, this software module knows that the applications A1 and A2 need content that can be quickly retrieved from Wi-Fi hotspot HSA2, the Wi-Fi access point WAPB2, or the Wi-Fi hotspot HSC2, so that the applications A1 and A2 are satisfied. In this example, it selects the Wi-Fi hotspot HSA2 because this latter can provide an accelerated delivery of the contents S1 and S2 thanks to the local copies S1' and S2' stored in the delivery appliances DA1 and DA2 present in the access network AN A

For instance, the terminal is running the application Dailymotion. This application supplies this information to the software module in charge of selecting an access point, in the terminal T2. So this software module knows that the access point that has responded with the application identifier Dailymotion should be preferred.

In both embodiments, the content of a response message can be extended with the advertisement of information on each delivery appliance itself and its state of health: Not only the terminal can be informed of the type of CDN which is served by a given access point, but also if it is operational.

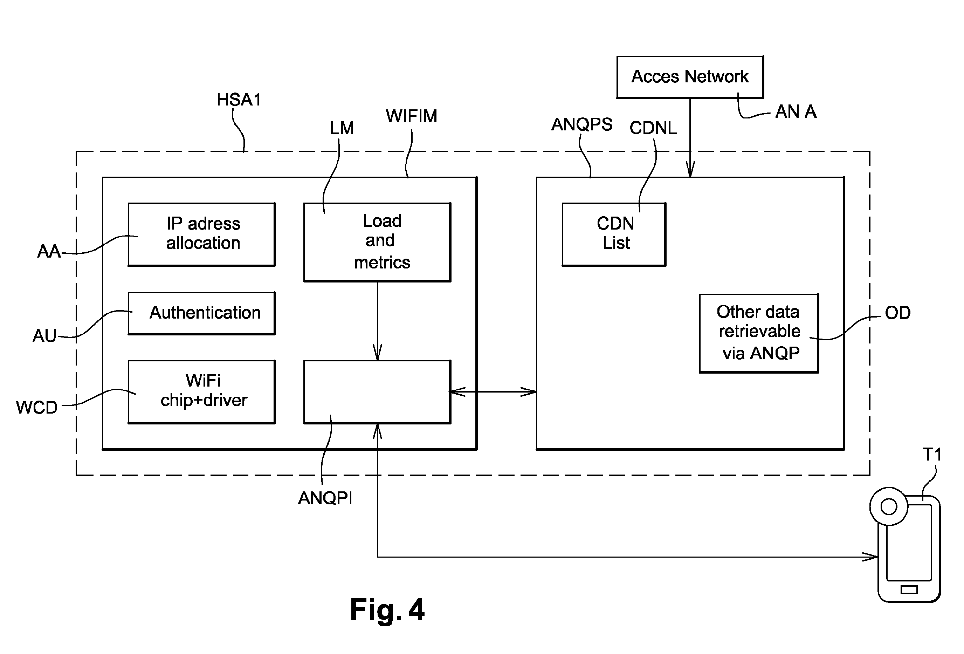

**Figure 4** shows a block diagram of an embodiment HSA1 of the access point according to the invention. It comprises a Wi-Fi module WIFIM and an ANQP server ANQPS. They can be in a same cabinet, or in different places. The Wi-Fi module WIFIM comprises:
- A classical Wi-Fi chipset and driver WCD providing a Wi-Fi transmitter-receiver function compliant with the standard Hotspot 2.0.
- A classical authentication module AU.
- A classical Internet protocol address allocation module AA.
- A classical load and metrics module LM in order e.g. to evaluate the load of the access point before connecting to it.
- An access network query protocol interface ANQPSI.

For implementing the first embodiment of the method according to the invention, the ANQP server ANQPS comprises a memory storing:
- A list CDNL of content delivery network identifiers for which at least one delivery appliance is present in the access network AN A to which this access point HSA1 is linked, this delivery appliance containing a local copy of content that the terminal may retrieve for said application.
- Other data classically retrievable via the protocol ANQP such as the organizationally unique identifier OUI A identifying the Internet Service Provider ISP A of the access network AN A.

The server ANQPS is linked to the access network AN A; and to the interface ANQPI of the Wi-Fi module WIFIM. The access network AN A provides, to the access point HSA1, information about the list of the content delivery network identifiers CDN X and CDN Y whose delivery appliances are present in the access network AN A, in this example.

The interface ANQPI is also linked to the load and metrics module LM, and to mobile terminals, T1 for instance, for exchanging ANQP query and response messages as described above with reference to figures 2 and 3.

For implementing the second embodiment of the method according to the invention, the ANQP server ANQPS comprises a memory storing at least one identifier (A1, A2 in the example of figure 3) of applications that may use content delivery networks for which the access network comprises a delivery appliance that actually contains a local copy S1', S2', ... of content that the terminal may retrieve for said application, instead of storing the list CDNL of content delivery network identifiers for which at least one delivery appliance is present in the access network AN A to which this access point HSA1 is linked.

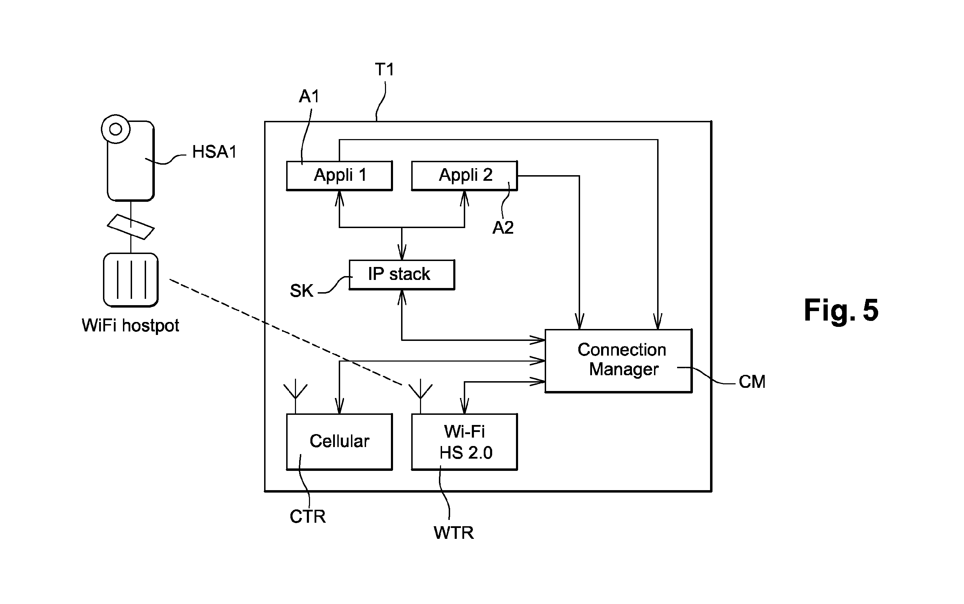

**Figure 5** shows a block diagram of an embodiment T1 of the terminal according to the invention. It comprises:
- A classical cellular transmitter-receiver CTR.
- A classical Wi-Fi transmitter-receiver WTR compliant with the standard Hotspot 2.0.
- A processor executing software comprising:
   -- An application A1.
   -- An application A2.
   -- A classical Internet protocol stack SK.
   -- A connection manager CM.

The applications A1 and A2 collaborate with the stack SK for retrieving content from the Internet. The connection manager CM is in charge of selecting first between a cellular network and a Wi-Fi network, if both are available. If several Wi-Fi networks are available, then it selects the Wi-Fi network that is the best for accelerating the content download for both applications A1 and A2. It sends ANQP query messages to all the available Wi-Fi access points, via the Wi-Fi transmitter-receiver WTR. The Wi-Fi transmitter-receiver WTR receives an ANQP response message from each available Wi-Fi access point and forwards the content of this message to the connection manager CM.

In an implementation of the first embodiment of the method according to the invention, the application A1 sends data to the connection manager CM, these data informing the connection manager CM that the application A1 may retrieve content that is replicated in delivery appliances present in the content delivery network CDN X. The application A2 sends data to the connection manager CM, these data informing the connection manager CM that the application A2 may retrieve content that is replicated in delivery appliances present in the content delivery network CDN Y.

The connection manager CM sends an ANQP query message to each available Wi-Fi access point, for instance HSA1. This query message comprises a CDN identifier request, in order to receive the CDN identifier of each CDN for which there is at least one delivery appliance in the access network to which the interrogated access point is linked.

It receives an ANQP response message from each interrogated Wi-Fi access point, this message comprising the CDN identifier of each CDN for which there is at least one delivery appliance, in the access network to which the interrogated Wi-Fi hotspot is linked.

As a function of the received CDN identifiers and of the data identifying the applications A1 and A2, it selects one Wi-Fi access points among the available Wi-Fi access points, access point WAPB2 and hotspot HSC2, so that the running applications A1 and A2 are satisfied.

In an implementation of the second embodiment of the method according to the invention, the applications A1 and A2 inform the connection manager CM that they are running in the terminal T1, and they give the identity of the operating system that is supporting them. So the connection manager CM knows the applications that may need content that can be retrieved from the Internet.

It sends ANQP query messages restively to the available Wi-Fi access points. Each of these query ANQP messages comprises an accelerated application list request, in order to receive the identifiers of all the applications for which there is at least one delivery appliance present in the access network to which the interrogated access point is linked.

Each available Wi-Fi access point sends an ANQP response message to the terminal, this message comprising the identifiers of the applications for which there is at least one operational delivery appliance, present in the access network to which the interrogated Wi-Fi access point is linked.

Then the connection manager CM selects one access point among the available Wi-Fi access point WAPB2 and the Wi-Fi hotspot HSC2, so that the applications A1 and A2 are satisfied.

As a function of the received application identifiers and of the data identifying the running applications A1 and A2, it selects one Wi-Fi access points among the available Wi-Fi access points, access point WAPB2 and hotspot HSC2, so that the running applications A1 and A2 are satisfied.

## Claims

1. **A method** for selecting a wireless access network, among several access networks (AN A, AN B, AN C) in order to accelerate content delivery for at least one application (A1, A2) running on a terminal (T1; T2), each access network comprising at least one delivery appliance (DA1, DA2, ...) belonging to a content delivery network (CDN X, CDN Y, ...) and containing a local copy (S1', S2', ...) of content that the terminal may retrieve for said application;
**characterized in that** it comprises the steps of:
- sending a query message (QM1a, ...; QM2A, ...) from a terminal (T1; T2) to an access point (HSA1, ...; HSA2, ...), this query message requesting data about at least one content delivery network (CDN X, CDN Y, ...) for which the access network to which the interrogated access point is linked comprises a delivery appliance (DA1, DA2, ...);
- then sending a response message (RP1a, ...; RP2a, ...) from the access point (HSA1, ...; HSA2, ...) to the terminal (T1; T2), this response message comprising first data about at least one content delivery network (CDN X, CDN Y, ...) for which the access network to which the interrogated access point is linked comprises a delivery appliance (DA1, DA2, ...);
- collecting, in the terminal, second data about at least one application (A1, A2) running in the terminal;
- and then selecting an access point as a function of these first and second data.

2. A method according to claim 1, wherein said first data comprise the identifier (CDN X, CDN Y, ...) of at least one content delivery network where a delivery appliance (DA1, DA2, ...) is present and contains a local copy (S1', S2', ...) of content that the terminal may retrieve for said application.

3. A method according to claim 1, wherein said first data comprise at least one application identifier (A1, A2) for which the access network comprises a delivery appliance that contains a local copy (S1', S2', ...) of content that the terminal may retrieve for said application.

4. **A wireless access point** (HSA1, ...) enabling a terminal to select a wireless access network among several access networks (AN A, AN B, AN C) in order to accelerate content delivery for at least one application (A1, A2) running on a terminal (T1; T2), this access point comprising means (WIFIM) for establishing a radio link with a terminal and means (ANQPS) for linking this access point to an access network (AN A);
**characterized in that** it comprises:
- means (ANQPS) for receiving a query message (QM1a, ...; QM2A, ...) from a terminal (T1; T2), this query message requesting data about at least one content delivery network (CDN X, CDN Y, ...) for which the access network to which the interrogated access point is linked comprises a delivery appliance (DA1, DA2, ...);
- and means for sending a response message (RP1a, ...; RP2a, ...) to a terminal (T1; T2), this response message comprising data about at least one content delivery network (CDN X, CDN Y, ...) for which the access network to which the interrogated access point is linked comprises a delivery appliance (DA1, DA2, ...).

5. A wireless access point (HSA1, ...) according to claim 4 wherein said data, about at least one content delivery network (CDN X, CDN Y, ...) for which the access network to which the interrogated access point is linked comprises a delivery appliance (DA1, DA2, ...), comprise at least one content delivery network identifier (CDN X, CDN Y, ...).

6. A wireless access point (HSA1, ...) according to claim 4 wherein said data, about at least one content delivery network (CDN X, CDN Y, ...) for which the access network to which the interrogated access point is linked, comprises a delivery appliance (DA1, DA2, ...) comprise at least one application identifier (A1, A2).

7. **A terminal** (T1, T2) that can select a wireless access network, among several access networks (AN A, AN B, AN C) in order to accelerate content delivery for at least one application (A1, A2) running on this terminal (T1; T2);
**characterized in that** it comprises:
- means (CM) for sending a query message (QM1a, ...; QM2A, ...) from this terminal (T1; T2) to an access point (HSA1, ...; HSA2, ...), this query message requesting data about at least one content delivery network (CDN X, CDN Y, ...) for which the access network to which the interrogated access point is linked comprises a delivery appliance (DA1, DA2, ...);
- means (CM) for receiving a response message (RP1a, ...; RP2a, ...) from the access point (HSA1, ...; HSA2, ...), this response message comprising first data about at least one content delivery network (CDN X, CDN Y, ...) for which the access network to which the interrogated access point is linked comprises a delivery appliance (DA1, DA2, ...);
- means (CM) for collecting, in the terminal, second data about at least one application (A1, A2) running in the terminal;
- and means (CM) for selecting an access point as a function of these first and second data.

8. A terminal (T1, T2) according to claim 7, wherein said first data comprise the identifier (CDN X, CDN Y, ...) of at least one content delivery network.

9. A terminal (T1, T2) according to claim 7, wherein said first data comprise at least one application identifier (A1, A2).

10. **A digital data storage medium** storing a set of machine executable program instructions, which, when executed on a computer, cause the computer to perform all the method steps of the method according to claims 1 to 3.

11. **A computer program product** comprising computer-executable instructions for performing a method when the program is run on a computer, the method comprising the steps of claims 1 to 3.
